# EUROPÄISCHE PATENTANMELDUNG

(11) **EP 4 729 527 A1**
(43) Veröffentlichungstag der Anmeldung: **22.04.2026**
(21) Anmeldenummer: 24207798.0
(22) Anmeldetag: 21.10.2024
(51) Int. Cl.: C07F 9/53, C09K 21/12

(54) **MISCHUNGEN VON PHENYLPHOSPHONSÄUREDIARYLESTER UND IHRE VERWENDUNG ALS FLAMMSCHUTZMITTEL**

(71) Anmelder: LANXESS Deutschland GmbH, 50569 Köln (DE)
(72) Erfinder: OMANN, Lukas, 50931 Köln (DE); MAUERER, Otto, 42799 Leichlingen (DE); HANSEL, Jan-Gerd, 51469 Bergisch Gladbach (DE)

(57) **Zusammenfassung**

Die vorliegende Erfindung betrifft neue Mischungen von Phenylphosphonsäurediarylestern, welche in thermoplastischen Formmassen gute Flammschutzeigenschaften und eine hohe weichmachende Wirkung zeigen.

## Beschreibung

Phosphorsäureester sind weitverbreitete und vielseitige industrielle Produkte, die in verschiedenen Anwendungen eingesetzt werden. Sie sind beispielsweise Bestandteil oder Additiv in Kunststoffen, Hydraulikflüssigkeiten, Schmierstoffen, Wärmeträgern, Lacken, Klebstoffen, Dichtmassen oder Beschichtungen. Seit geraumer Zeit mehren sich aber Zweifel, ob diese Substanzen zeitgemäßen Anforderungen an Produktsicherheit noch gerecht werden. Insbesondere in verbrauchernahen Anwendungen werden daher zunehmend Alternativen gefordert, die auf anderen chemischen Strukturen basieren.

In Kunststoffen werden die etablierten Phosphorsäureester als Weichmacher und Flammschutzmittel eingesetzt. Beispielsweise werden sie zur Herstellung von flammwidrigem Weich-PVC für Bodenbeläge, Dichtungen, Schläuche oder Kabel verwendet. Dabei ist es erforderlich, dass die eingesetzte Phosphorverbindung sowohl eine weichmachende als auch flammhemmende Wirkung in PVC zeigt.

Neben den klassischen Phosphorsäureestern sind dem Fachmann auch Phenylphosphonsäurediarylester als Flammschutzmittel in verschiedenen Kunststoffen bekannt. So wurde beispielsweise der Phenylphosphonsäurebis(2,6-dimethylphenyl)ester in ABS-Polymeren (J. Macromol. Sci., Part B 2012, 51, 2141-2156) und in Epoxidharzen (J. Appl. Polym. Sci. 2015, 132, 42765) eingesetzt. Der Phenylphosphonsäurebis(4-tert-butylphenyl)ester wurde in Polycarbonaten (US 2009 149587 A1) eingesetzt. Die Einsetzbarkeit des Phenylphosphonsäurediphenylesters als Flammschutzmittel und Weichmacher wird in EP 0043482 A2 erwähnt, ohne dass Details oder Prüfergebnisse dazu genannt werden. Alle diese Flammschutzmittel sind bei Raumtemperatur Feststoffe, was deren Handhabung im technischen Gebrauch im Vergleich zu Flüssigkeiten aufwendig macht.

In CN 116396573 A werden Phenylphosphonsäurediarylester als weichmachende Flammschutzmittel in PVC beschrieben. Zur Herstellung dieser Produkte wird Cardanol als Rohstoff eingesetzt und mit Phenylphosphonsäuredichlorid zu einer Mischung aus Phenylphosphonsäurediarylestern umgesetzt. Die weichmachende Wirkung dieser Produkte wird auf die C15-Seitenkette des Cardanols zurückgeführt. Aufgrund der damit verbundenen hohen Molmasse des Cardanols weisen die dort beschriebenen Produkte einen nur sehr geringen Phosphorgehalt von weniger als 4,5 Gew-% auf. Ein derart geringer Gehalt an Phosphor bedeutet in der Praxis, dass weitere flammwidrige Additive zugesetzt werden müssen, um neben der weichmachenden Wirkung den gewünschte flammhemmenden Effekt zu erzielen. Die Erfinder verwenden daher bei der Ausprüfung der erfindungsgemäßen Phosphonate ausschließlich Rezepturen, die weitere Flammschutzmittel, wie Montmorillonit, Anhydrit und chloriertes Polyethylen, enthalten. Diese komplexe Formulierung stellt einen erheblichen technischen Mehraufwand dar. Zudem wirken sich mineralische Flammschutzmittel negativ auf die Transparenz des PVC-Compounds auf, was für manche anspruchsvolle Anwendungen nicht wünschenswert ist. Über die Verträglichkeit und Lagerstabilität der eingesetzten Phenylphosphonsäurediarylestern mit PVC wird in der Veröffentlichung nicht eingegangen. Nachteilig an der Erfindung ist außerdem, dass Cardanol zur Zeit nicht in technisch relevanten Mengen am Markt verfügbar ist.

Um die genannten Nachteile im Stand der Technik zu überwinden, sind bei Raumtemperatur (23 °C) flüssige Phenylphosphonsäurediarylester wünschenswert, die in thermoplastischen Formmassen, insbesondere in PVC, eine gute Flammschutzwirkung bei gleichzeitig guter Weichmacherwirkung zeigen.

Aufgabe der vorliegenden Erfindung war es daher, Phenylphosphonsäurediarylester bereitzustellen, die in thermoplastischen Formmassen, insbesondere PVC, sowohl eine gute Flammschutzwirkung als auch eine gute Weichmacherwirkung zeigen. Da die PVCverarbeitende Industrie auf die Handhabung flüssiger Weichmacher eingestellt ist, sollten die gesuchten Produkte vorzugsweise bei Raumtemperatur (23 °C) als Flüssigkeiten vorliegen. Für die technische Anwendbarkeit von weichmachenden Flammschutzmitteln ist es erforderlich, dass das Additiv mit dem jeweiligen Kunststoff verträglich ist. Eine weitere Aufgabe der Erfindung war es daher, Phenylphosphonsäurediarylester bereitzustellen, die mit thermoplastischen Formmassen, insbesondere Weich-PVC, verträglich sind.

Die Aufgabe wird gelöst durch Mischungen von Phenylphosphonsäurediarylestern enthaltend
(i) 8 bis 60 Gew.-% Phenylphosphonsäurediarylester gemäß Formel (I) 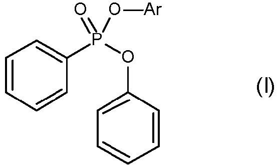
(ii) 0,5 bis 91,5 Gew.-% Phenylphosphonsäurediarylester gemäß Formel (II), 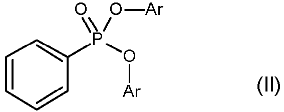 sowie
(iii) 0,5 bis 91,5 Gew.-% Phenylphosphonsäurediphenylester gemäß Formel (III) 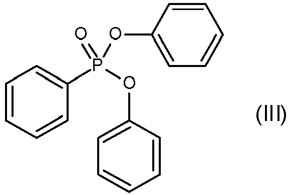 jeweils bezogen auf die Gesamtmenge der Phenylphosphonsäureester der Formeln (I) bis (III), wobei Ar für einen ein- oder mehrfach alkylsubstituierten Arylrest mit insgesamt 7 - 10 Kohlenstoffatomen steht.

Bevorzugt enthalten die erfindungsgemäßen Mischungen von Phenylphosphonsäurediarylestern
(i) 20 bis 60 Gew.-% Phenylphosphonsäurediarylester gemäß Formel (I)
(ii) 1 bis 79 Gew.-% Phenylphosphonsäurediarylester gemäß Formel (II), sowie
(iii) 1 bis 79 Gew.-% Phenylphosphonsäurediphenylester gemäß Formel (III) jeweils bezogen auf die Gesamtmenge der der Phenylphosphonsäureester der Formeln (I) bis (III), wobei Ar die oben genannte Bedeutung hat.

Besonders bevorzugt enthalten die erfindungsgemäßen Mischungen von Phenylphosphonsäurediarylestern
(i) 30 bis 55 Gew.-% Phenylphosphonsäurediarylester gemäß Formel (I)
(ii) 5 bis 65 Gew.-% Phenylphosphonsäurediarylester gemäß Formel (II), sowie
(iii) 5 bis 65 Gew.-% Phenylphosphonsäurediphenylester gemäß Formel (III)
jeweils bezogen auf die Gesamtmenge der Phenylphosphonsäureester der Formeln (I) bis (III), wobei Ar die oben genannte Bedeutung hat.

In einer bevorzugten Ausführungsform steht Ar in Formel (I) bzw. Formel (II) für 2-Methylphenyl, 3-Methylphenyl, 4-Methylphenyl, 2-Ethylphenyl, 3-Ethylphenyl, 4-Ethylphenyl, 2-Propylphenyl, 3-Propylphenyl, 4-Propylphenyl (wobei mit "Propylphenyl" jeweils sowohl n-Propylphenyl als auch iso-Propylphenyl gemeint ist), 2-Butylphenyl, 3-Butylphenyl, 4-Butylphenyl (wobei mit "Butylphenyl" jeweils sowohl n-Butylphenyl, iso-Butylphenyl, sec-Butylphenyl odertert-Butylphenyl gemeint ist), 2,3-Dimethylphenyl, 2,4-Dimethylphenyl, 2,5-Dimethylphenyl, 2,6-Dimethylphenyl, 3,4-Dimethylphenyl oder 2-Isopropyl-5-methylphenyl. In einer weiter bevorzugten Ausführungsform steht Ar in Formel (I) bzw. Formel (II) für 2-Methylphenyl, 3-Methylphenyl, 4-Methylphenyl, 2-Isopropylphenyl, 3-Isopropylphenyl, 4-Isopropylphenyl, 4-tert-Butylphenyl oder 2-Isopropyl-5-methylphenyl.

In einer alternativen Ausführung der Erfindung enthalten die Mischungen von Phenylphosphonsäurediarylestern mehr als drei verschiedene Phenylphosphonsäurediarylester. Beispielhaft können sechs verschiedene Phenylphosphonsäurediarylestern in den erfindungsgemäßen Mischungen enthalten sein.

In einer Ausführung der Erfindung enthalten die erfindungsgemäßen Mischungen
(i) 0,1 bis 60 Gew.-% Phenylphosphonsäurearylphenylester gemäß Formel (IV)
(ii) 0,1 bis 60 Gew.-% Phenylphosphonsäurearylphenyl gemäß Formel (V), sowie
(iii) 0,01 bis 95 Gew.-% Phenylphosphonsäurediarylester gemäß Formel (VI)
(iv) 0,01 bis 95 Gew.-% Phenylphosphonsäurediarylester gemäß Formel (VII)
(v) 0,01 bis 30 Gew.-% Phenylphosphonsäurediarylester gemäß Formel (VIII), sowie
(vi) 0,5 bis 95 Gew.-% Phenylphosphonsäurediphenylester gemäß Formel (III) 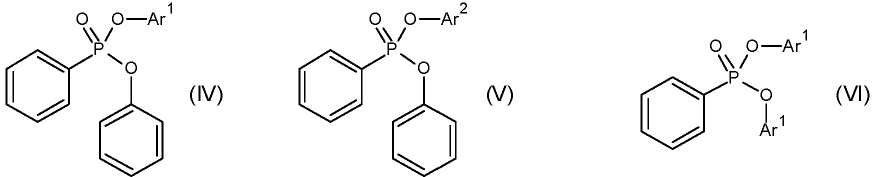 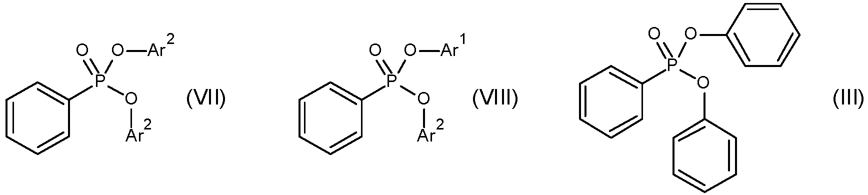
jeweils bezogen auf die Gesamtmenge der der Phenylphosphonsäureester der Formeln (II) bis (VIII), wobei Ar¹ und Ar² unabhängig voneinander für einfach oder mehrfach substituierte C7-C10 Alkarylreste stehen.

In einer bevorzugten Ausführungsform bestehen die erfindungsgemäßen Mischungen von Phenylphosphonsäurediarylestern aus den Phenylphosphonsäureester der Formeln (I) bis (III), wobei Ar die oben genannte Bedeutung hat.

In einer bevorzugten Ausführungsform steht Ar¹ in Formel (IV), Formel (VI) und Formel (VIII) bzw. Ar² in Formel (V), Formel (VII) und Formel (VIII) unabhängig voneinander für 2-Methylphenyl, 3-Methylphenyl, 4-Methylphenyl, 2-Ethylphenyl, 3-Ethylphenyl, 4-Ethylphenyl, 2-Propylphenyl, 3-Propylphenyl, 4-Propylphenyl (wobei mit "Propylphenyl" sowohl n-Propylphenyl als auch iso-Propylphenyl gemeint ist), 2-Butylphenyl, 3-Butylphenyl, 4-Butylphenyl (wobei mit "Butylphenyl" sowohl n-Butylphenyl, iso-Butylphenyl, sec-Butylphenyl oder tert-Butylphenyl gemeint ist), 2,3-Dimethylphenyl, 2,4-Dimethylphenyl, 2,5-Dimethylphenyl, 2,6-Dimethylphenyl, 3,4-Dimethylphenyl oder 2-Isopropyl-5-methylphenyl.

Bevorzugt liegen die erfindungsgemäßen Mischungen von Phenylphosphonsäurediarylestern bei 23 °C als Flüssigkeit vor, da eine solche Zustandsform die Verwendung als Flammschutzmittel erleichtern oder erst ermöglichen. Bevorzugt weisen die Mischungen von Phenylphosphonsäurediarylester eine dynamische Viskosität von 5 bis 5000 mPa s, besonders bevorzugt von 5 bis 2000 mPa s, ganz besonders bevorzugt von 5 bis 1000 mPa·s auf (jeweils bei 23 °C).

Bevorzugt weisen die erfindungsgemäßen Mischungen von Phenylphosphonsäurediarylestern eine niedrige Säurezahl auf, da sich hohe Säurezahlen negativ auf die Langzeitstabilität des verwendeten Kunststoffs, beispielsweise PVC, auswirken können. Bevorzugt weisen die erfindungsgemäßen Zubereitungen eine Säurezahl kleiner 5 mg KOH/g, bevorzugt kleiner 1 mg KOH/g, besonders bevorzugt kleiner 0,3 mg KOH/g, ganz bevorzugt kleiner 0,1 mg KOH/g auf.

Die erfindungsgemäßen Mischungen von Phenylphosphonsäurediarylestern können einfach über literaturbekannte Synthesemethoden hergestellt werden. Beispielshaft sei die im J. Macromol. Sci., Part B 2012, 51, 2141-2156 veröffentlichte Synthese genannt, in der eine Lösung eines Phenols und Triethylamin mit Phenylphosphonsäuredichlorid (PhP(O)Cl₂) versetzt wird. Durch Einsatz von Phenol und mindestens einem weiteren substituierten Phenol sind die erfindungsgemäßen Mischungen von Phenylphosphonsäurediarylestern zugänglich.

Zur Herstellung der erfindungsgemäßen Mischungen von Phenylphosphonsäurediarylestern können neben Phenol noch ein, zwei, drei oder mehr unterschiedliche Phenole eingesetzt werden. Bevorzugt werden neben Phenol noch ein oder zwei unterschiedliche Phenole eingesetzt.

Die erfindungsgemäßen Mischungen von Phenylphosphonsäurediarylestern können als Weichmacher und/oder Flammschutzmittel in thermoplastischen Formmassen eingesetzt werden. Bei den thermoplastischen Formmassen handelt es sich um thermisch verformbare (Co-)Polymere, wie z.B. Polyethylen, Polypropylen, Polyvinylchlorid, Polystyrol, Polycarbonat, Polyurethan, Polyethylenterephthalat, Polybutylenterephthalat, Polyamid, Polyester, Acrylnitril-Butadien-Styrol-Copolymer, Styrol-Acrylnitril-Copolymer, Polymethylmethacrylat, Polyetherketon, Polyetheretherketon, Polyphenylensulfid, Polysulfon, Polyethersulfon, Polyphenylsulfon, Polyamidimid, Celluloseester oder Polymilchsäure. Besonders bevorzugt werden sie in Polyvinylchlorid (PVC) eingesetzt.

Die erfindungsgemäßen Mischungen von Phenylphosphonsäurediarylestern können neben den Phenylphosphonsäureester der Formeln (I) bis (III) noch weitere Hilfsstoffe enthalten. Als Hilfsstoffe kommen zum Beispiel Weichmacher, weichmachende Polymere, polymere Modifikatoren, Stabilisatoren (z.B. Thermostabilisatoren, Lichtstabilisatoren, Antioxidantien), Co-Stabilisatoren (z.B. Säurefänger, Radikalfänger), innere und äußere Gleitmittel, Viskositätsregler, Füllstoffe, Farbpigmente, Farbstoffe, Flammschutzmittel, Flammschutzmittel-Synergisten, Treibmittel sowie weitere Funktionsadditive wie z.B. Antistatika, Nukleierungsmittel, UV-Schutzmittel oder Biozide, in Frage (siehe z.B. R. D. Maier, M. Schiller, Handbuch Kunststoff-Additive, 4. Auflage, München, Carl Hanser Verlag, 2016, S. 513 ff).

Typischerweise beträgt der Anteil der Phenylphosphonsäureester der Formeln (I) bis (III), wobei Ar die oben genannte Bedeutung hat, in den erfindungsgemäßen Mischungen von Phenylphosphonsäurediarylestern von 25 bis 100 Gew.-%, bevorzugt von 50 bis 99 Gew.-% weiter bevorzugt von 75 bis 98 Gew.-% und meist bevorzugt von 85 bis 97 Gew.-%.

Typische Weichmacher, die zusammen mit den erfindungsgemäßen Mischungen von Phenylphosphonsäurediarylestern in Kunststoffen eingesetzt werden können, sind Carbonsäureester, beispielsweise Ester der Benzoesäure oder Diester der Adipinsäure, Sebacinsäure, Azelainsäure, Phthalsäure, Terephthalsäure oder 1,2-Cyclohexandicarbonsäure oder Polyester dieser Disäuren. Weitere typische Weichmacher sind Alkylsulfonsäureester des Phenols.

Die erfindungsgemäßen Mischungen eignen sich als Flammschutzmittel. Ein weiterer Gegenstand der vorliegenden Erfindung ist somit die Verwendung der erfindungsgemäßen Mischungen als Flammschutzmittel.

Die erfindungsgemäßen Mischungen eignen sich als Weichmacher. Ein weiterer Gegenstand der vorliegenden Erfindung ist somit die Verwendung der erfindungsgemäßen Mischungen als Weichmacher.

Ein weiter bevorzugter Gegenstand der Erfindung stellt die Verwendung der Mischungen als weichmachende Flammschutzmittel dar.

Die erfindungsgemäßen Mischungen können als Flammschutzmittel in allen dem Fachmann bekannten Anwendungen für Flammschutzmittel verwendet werden. Bevorzugt werden die erfindungsgemäße Mischungen als Flammschutzmittel für
- synthetische Polymere, wie Polyolefine, Polyvinylchlorid, Polycarbonate, Styrolbasierte (Co-)Polymere, Polyamide, Polyester, Polyurethane, Elastomere wie NBR, CR, SBR, oder EPDM und Duroplaste wie Epoxidharze, ungesättigte Polyesterharze und Phenol-Formaldehydharze, Cellulosester, Polymilchsäure
- Werkstoffe pflanzlichen Ursprungs, wie Holz, Holz-Kunststoff-Komposite, Papier und Pappe, und
- Werkstoffe tierischen Ursprungs, wie Leder, verwendet.

Besonders bevorzugt werden die erfindungsgemäßen Mischungen als Flammschutzmittel für Polyvinylchlorid (PVC) verwendet, beispielsweise in PVC-Formmassen, d.h. in Zusammensetzungen enthaltend PVC welche in Form eines Granulats, eines Pulvers, einer Paste, eines Plastisols oder Organosols vorliegen.

Gegenstand der Erfindung sind daher auch Zusammensetzungen vorzugsweise in Form eines Granulats, eines Pulvers, einer Paste oder eines Plastisols, enthaltend eine erfindungsgemäße Mischung und Polyvinylchlorid (PVC). Bevorzugt handelt es sich bei diesen erfindungsgemäßen PVC-Formmassen um Weich-PVC. Die erfindungsgemäßen PVC-Formmassen können hergestellt werden, indem man PVC mit den erfindungsgemäßen Mischungen und gegebenenfalls weiterer Hilfsstoffe, z.B. Stabilisatoren in an sich bekannter Weise (siehe z.B. G. Becker, D. Braun, Kunststoff-Handbuch, Polyvinylchlorid, Bd.2/2, München, Wien, Carl Hanser Verlag, 1986, S.829 ff) vermischt und compoundiert oder zu einem verarbeitungsbereiten Plastisol oder Organosol dispergiert.

Die erfindungsgemäße PVC-Formmasse enthält vorzugsweise 5 bis 150 Gewichtsteile, bevorzugt 10 bis 120 Gewichtsteile, bevorzugt 20 bis 100 Gewichtsteile, besonders bevorzugt 30 bis 70 Gewichtsteile der Phenylphosphonsäureester der Formeln (I) bis (III) bezogen auf 100 Gewichtsteile PVC.

Die erfindungsgemäße PVC-Formmasse findet Anwendung in Beschichtungen, Folien, Fußbodenbelägen, Kabel, Rohrleitungen, Schläuchen, Dichtungen, Förderbändern, Dachbahnen, Klebebandfolien, Planen, Markisen und Zelten.

Ein weiterer Gegenstand der Erfindung ist die Verwendung der erfindungsgemäßen Mischungen in Hydraulikflüssigkeiten oder als Additiv in Hydraulikflüssigkeiten. Bevorzugt werden die erfindungsgemäßen Mischungen in flammwidrigen Hydraulikflüssigkeiten verwendet.

Ein weiterer Gegenstand der Erfindung ist die Verwendung der erfindungsgemäßen Mischungen als Schmierstoffadditiv. Bevorzugt werden die erfindungsgemäßen Mischungen in flammwidrigen Schmierstoffen verwendet.

Ein weiterer Gegenstand der Erfindung ist die Verwendung der erfindungsgemäßen Mischungen als Additiv für Lacke, Klebstoffe, Dichtmassen und Beschichtungen.

Ein weiterer Gegenstand der Erfindung ist die Verwendung der erfindungsgemäßen Mischungen als Wärmeträger oder als Additiv in Wärmeträger-Zubereitungen. Bevorzugt werden die erfindungsgemäßen Mischungen als Wärmeträger oder in Wärmeträger-Zubereitungen in der Immersionskühlung elektrischer Komponenten verwendet. Die Wärmeträger-Zubereitungen enthalten neben den erfindungsgemäßen Mischungen beispielsweise weitere Trialkylphosphate, Triarylphosphate, Mineralöle, Polyalphaolefine, Ester, Antioxidantien, Metalldeaktivatoren, Fließadditive, Korrosionsinhibitoren, Schauminhibitoren, Demulgatoren und/oder Pourpoint-Erniedriger.

Ein weiterer Gegenstand der Erfindung ist die Verwendung der erfindungsgemäßen Mischungen als Lösungs- oder Extraktionsmittel.

### Beispiele

### Bestimmung der Zusammensetzung von Mischungen aus Phenylphosphonsäurediarylestern

Die quantitative GC-FID-Analytik wurde mit einem Agilent GC-Gerät des Typs 7890A ausgestattet mit einer Quarzkapillarsäule des Typs CB-Sil 5 CB (Länge: 30 m, Durchmesser: 0,32 mm, Schichtdicke: 3,00 µm) durchgeführt. Als Trägergas wurde Wasserstoff verwendet. Die Injektion der Probe (gelöst in Aceton) erfolgte im Split-Modus (86:1) bei einer Temperatur von 300°C. Folgendes Temperaturprogramm wurde eingestellt: 80°C Starttemperatur, Heizrate 7°C/min bis zu einer Temperatur von 300°C, Haltezeit: 12 min. Die Auswertung erfolgte durch Integration des entsprechenden basisliniengetrennten Signale und Umrechnen der Peakflächen in einen Gehalt nach vorheriger Kalibration.

### Bestimmung der Viskosität von Mischungen aus Phenylphosphonsäurediarylestern

Die Messung der dynamischen Viskosität von Phenylphosphonsäureestern erfolgte mit einem Anton Paar Scherrheometer des Typs MCR 102 bei der angegebenen Temperatur mit einer Scherrate von 200 s⁻¹ gemäß DIN 53018.

### Bestimmung der Säurezahl von Mischungen aus Phenylphosphonsäurediarylestern

Die Säurezahl der Proben wurde in Anlehnung an die DIN EN ISO 2114 (Verfahren B, kolorimetrische Titration mit Phenolphthalein) durchgeführt. Dazu wurde die Probe (10 g) eingewogen, in Aceton (200 mL) und Wasser (50 mL) gelöst und mit 2-3 Tropfen einer Phenolphthalein-Lösung (0,1 Gew.-% in Ethanol/Wasser (v/v = 4/1)) versetzt. Aus einer Bürette wurde solange Natronlauge (0,1 mol/L) titriert bis der Farbumschlag von farblos zu pink für mindestens 10 Sekunden unter Rühren bestehen blieb. In gleicher Weise aber ohne Probe wurde ein Blindwert gemessen.

### Synthesebeispiele

### Allgemeine Synthesevorschrift zur Herstellung von Phenylphosphonsäurediarylester

In Anlehnung an die bekannte Vorschrift J. Macromol. Sci., Part B 2012, 51, 2141-2156 wird in einem Reaktor mit Rührer, Innenthermometer, Stickstoffeinleitung und Rückflusskühler eine Lösung der Phenolbausteine und Triethylamin in Toluol vorgelegt und bei 0-5 °C mit Phenylphosphonsäuredichlorid versetzt. Nach beendeter Dosierung wird die Reaktionsmischung mit Wasser verdünnt. Die organische Phase wird zweimal mit Natronlauge (1 mol/L) und dreimal mit Wasser gewaschen. Nach destillativer Abtrennung der Lösungsmittel wird das Produkt erhalten.

### Synthesebeispiel 1 (Vergleichsbeispiel): Phenylphosphonsäurediphenylester

Hergestellt nach der allgemeinen Synthesevorschrift aus Phenol (0,99 Gewichtsteile), Triethylamin (1,09 Gewichtsteile), Toluol (7,0 Gewichtsteile) und Phenylphosphonsäuredichlorid (1,00 Gewichtsteile). Das Produkt wurde als weißer Feststoff isoliert. Die Säurezahl betrug 0,4 mg KOH/g. Das Produkt enthielt >99,9 Gew-% Phenylphosphonsäurediphenylester.

### Synthesebeispiel 2 (Vergleichsbeispiel): Phenylphosphonsäurebis-(4-tert-butylphenyl)ester

Hergestellt nach der allgemeinen Synthesevorschrift aus 4-tert-Butylphenol (1,58 Gewichtsteile), Triethylamin (1,09 Gewichtsteile), Toluol (7,0 Gewichtsteile) und Phenylphosphonsäuredichlorid (1,00 Gewichtsteile). Das Produkt wurde als weißer Feststoff isoliert. Die Säurezahl betrug 0,3 mg KOH/g. Das Produkt enthielt >99,9 Gew-% Phenyl-phosphonsäurebis(4-tert-butylphenyl)ester.

### Synthesebeispiel 3 (erfindungsgemäß): Phenylphosphonsäurediarylester-Mischung hergestellt aus Phenylphosphonsäuredichlorid und 3-Methylphenol, 4-Methylphenol und Phenol

Hergestellt nach der allgemeinen Synthesevorschrift aus 3-Methylphenol (0,40 Gewichtsteile), 4-Methylphenol (0,17 Gewichtsteile), Phenol (0,50 Gewichtsteile), Triethylamin (1,08 Gewichtsteile), Toluol (7,0 Gewichtsteile) und Phenylphosphonsäuredichlorid (1,00 Gewichtsteile). Das Produkt wurde als Flüssigkeit mit einer Viskosität von 111 mPa·s (23°C) isoliert. Die Säurezahl betrug 0,27 mg KOH/g. Das Produkt enthielt 12,4 Gew-% Phenylphosphonsäurebis(3-methylphenyl)ester, 10,8 Gew-% Phenylphosphonsäure(3-methylphenyl)(4-methylphenyl)ester, 2,2 Gew-% Phenylphosphonsäurebis(4-methylphenyl)ester, 35,4 Gew-% Phenylphosphonsäure(3-methylphenyl)(phenyl)ester, 15,2 Gew-% Phenylphosphonsäure(4-methylphenyl)(phenyl)ester und 23,9 Gew-% Phenylphosphonsäurediphenylester.

### Synthesebeispiel 4 (erfindungsgemäß) Phenylphosphonsäurediarylester-Mischung hergestellt aus Phenylphosphonsäuredichlorid und 3-Methylphenol, 4-Methylphenol und Phenol

Hergestellt nach der allgemeinen Synthesevorschrift aus 3-Methylphenol (0,30 Gewichtsteile), 4-Methylphenol (0,12 Gewichtsteile), Phenol (0,62 Gewichtsteile), Triethylamin (1,09 Gewichtsteile), Toluol (7,0 Gewichtsteile) und Phenylphosphonsäuredichlorid (1,00 Gewichtsteile). Das Produkt wurde als Flüssigkeit mit einer Viskosität von 121 mPa·s (23°C) isoliert. Die Säurezahl betrug <0,1 mg KOH/g. Das Produkt enthielt 7,9 Gew-% Phenylphosphonsäurebis(3-methylphenyl)ester, 7,1 Gew-% Phenylphosphonsäure(3-methylphenyl)(4-methylphenyl)ester, 1,6 Gew-% Phenylphosphonsäure-bis(4-methylphenyl)ester, 33,9 Gew-% Phenylphosphonsäure(3-methylphenyl)(phenyl)-ester, 14,5 Gew-% Phenylphosphonsäure(4-methylphenyl)(phenyl)ester und 34,9 Gew-% Phenylphosphonsäurediphenylester.

### Synthesebeispiel 5 (erfindungsgemäß) Phenylphosphonsäurediarylester-Mischung hergestellt aus Phenylphosphonsäuredichlorid und 3-Methylphenol und Phenol

Hergestellt nach der allgemeinen Synthesevorschrift aus 3-Methylphenol (0,57 Gewichtsteile), Phenol (0,50 Gewichtsteile), Triethylamin (1,08 Gewichtsteile), Toluol (7,0 Gewichtsteile) und Phenylphosphonsäuredichlorid (1,00 Gewichtsteile). Das Produkt wurde als Flüssigkeit mit einer Viskosität von 105 mPa·s (23°C) isoliert. Die Säurezahl betrug <0,1 mg KOH/g. Das Produkt enthielt 25,3 Gew-% Phenylphosphonsäurebis(3-methylphenyl)ester, 50,5 Gew-% Phenylphosphonsäure(3-methylphenyl)(phenyl)ester und 24,2 Gew-% Phenylphosphonsäurebisphenylester.

### Synthesebeispiel 6 (erfindungsgemäß) Phenylphosphonsäurediarylester-Mischung hergestellt aus Phenylphosphonsäuredichlorid und 4-tert-Butylphenol und Phenol

Hergestellt nach der allgemeinen Synthesevorschrift aus 4-tert-Butylphenol (0,40 Gewichtsteile), Phenol (0,74 Gewichtsteile), Triethylamin (1,09 Gewichtsteile), Toluol (7,0 Gewichtsteile) und Phenylphosphonsäuredichlorid (1,00 Gewichtsteile). Das Produkt wurde als Flüssigkeit mit einer Viskosität von 233 mPa·s (23°C) isoliert. Die Säurezahl betrug <0,1 mg KOH/g. Das Produkt enthielt 12,4 Gew-% Phenylphosphonsäurebis(4-tert-butylphenyl)ester, 48,2 Gew-% Phenylphosphonsäure(4-tert-butylphenyl)(phenyl)-ester und 39,3 Gew-% Phenylphosphonsäurediphenylester.

Überraschend wurden die erfindungsgemäßen Produkte aus Beispiel 3-6 als bei Raumtemperatur (23 °C) flüssige Produkte isoliert. Hingegen sind der aus EP 0043482 A2 bekannte Phenylphosphonsäurediphenylester (Beispiel 1) und der aus US 2009 149587 A1 bekannte Phenylphosphonsäure-bis(4-tert-butylphenyl)ester (Beispiel 2) Feststoffe.

### Herstellung von Weich-PVC

Die für die Ausprüfung eingesetzten Weich-PVC-Formmassen wurden auf einem Laborwalzwerk hergestellt. Nach dem Aufgeben der Mischung aller Rezepturbestandteile (siehe Tabelle 1) beließ man diese auf der Walze bis eine Fellbildung erfolgte. Ab dem Zeitpunkt der Fellbildung wurden die Compounds noch 10 Minuten auf dem Walzwerk compoundiert und schließlich als Walzfell abgenommen. Die Walztemperatur betrug 165°C.

Die Prüfkörper zur Bestimmung des LOI wurden aus den Walzfellen mit einer Presse hergestellt. Die Presstemperatur betrug 170°C, die Pressdauer 4 Minuten zum Vorwärmen bei Niederdruck (< 10 bar) und 2 Minuten bei Hochdruck (> 100 bar). Aus den 4 mm dicken Pressplatten wurden Prüfkörper mit den Abmessungen 90 x 13 x 4 mm gesägt.

Die Prüfkörper zur Bestimmung der Verträglichkeit und der Härte der Compounds (50 x 40 x 6 mm) wurden wegen der großen Dicke von 6 mm bei gleicher Temperatur länger gepresst. Die Pressdauer betrug 7 Minuten zum Vorwärmen bei Niederdruck und 3 Minuten zum Formpressen bei Hochdruck.

**Tabelle 1: Rezepturbestandteile zur Herstellung von Weich-PVC.**

| **Komponente** | **Funktion** | **Beschreibung** | **Menge** (Gewichtsteile) |
|---|---|---|---|
| A | PVC | Vinnol S4170 | 100 |
| B | Co-Stabilisator | EPO 65-1 epoxidiertes Sojabohnenöl | 2,5 |
| C | PVC-Stabilisator | Bärostab UBZ 780 RF | 2,5 |
| D | Flammschutzmittel | Synthesebeispiele 1-6 | 55 |

Nach dieser Vorschrift wurden PVC-Muster hergestellt.

### Bestimmung der Verträglichkeit

Neben der bestimmungsgemäßen Wirksamkeit eines Polymeradditivs, wie z. B. Flammwidrigkeit, erwartet man auch, dass das Additiv keine negativen Auswirkungen auf die sonstigen Eigenschaften des Polymers ausübt. So sollen z. B. die mechanischen und optischen Eigenschaften eines Polymers weitgehend erhalten bleiben. Dem Fachmann ist bekannt, dass nicht jedes Additiv mit jedem Polymer verträglich ist. Bei einer Unverträglichkeit kann es zu Entmischung von Additiv und Polymer nach der Verarbeitung kommen, die sich in Form von festen oder flüssigen Abscheidungen des Additivs auf der Oberfläche des Polymercompounds zeigt. Der Fachmann spricht dann von Blooming (feste Abscheidungen) oder Exsudation (flüssige Abscheidungen). Solche Unverträglichkeiten sind in der Regel gut sichtbar und führen zu einem Materialbild, das unerwünscht ist: Flüssige Abscheidungen erzeugen eine fettig glänzende Oberfläche und feuchten, schmierigen Griff. Feste Abscheidungen erzeugen einen meist weißen, festen Belag. In beiden Fällen leidet die Homogenität des Compounds. Trübe Bereiche mit beeinträchtigter Transparenz sind bei Unverträglichkeit für Weich-PVC typisch.

Zur Bestimmung der Verträglichkeit wurden die PVC-Compounds für 4 Wochen bei 23°C und 50% Luftfeuchtigkeit gelagert und anschließend visuell bewertet.

### Bestimmung der Flammwidrigkeit

Für die Beurteilung der Flammwidrigkeit wurde der Sauerstoffindex (Limiting Oxygen Index = LOI) herangezogen. Der LOI ist ein Maß für das Brandverhalten von Kunststoffen und anderen Werkstoffen. Der LOI ist die minimale Sauerstoffkonzentration eines Sickstoff/Sauerstoff-Gemisches, unter der die Verbrennung eines Prüfkörpers unter normierten Bedingungen gerade noch stattfinden kann. Je höher der LOI, desto höher ist die Wirksamkeit des Flammschutzmittels. Die Prüfung wurde gemäß ISO 4589-2 durchgeführt. Für eine praktische Anwendbarkeit sollte bei der Prüfung ein Wert von mindestens 30 erzielt werden.

### Bestimmung der Weichmacherwirkung

Die Weichmacherwirkung der Phosphorsäureester wurde mit einer Shore A-Härte-Messung der Phosphorsäureester-enthaltenden Weich-PVC-Compounds bestimmt. Das Messprinzip beruht auf der Eindringtiefe eines Metallprüfstiftes in die Materialprobe für 15 s mit einer Kraft von 12,5 N. Bestimmt wurde die Shore A-Härte bei Prüfkörpern mit den Abmessungen von 50 x 40 x 6 mm. Die Shore-Härte-Messung wurde in Anlehnung an die DIN ISO 7619-1 ausgeführt. Als Indikator für eine weichmachende Wirkung ist eine Shore A-Härte von weniger als 95 anzusehen.

Die Ergebnisse der Messungen sind in Tabelle 2 zusammengefasst.

**Tabelle 2: Bestimmung von Verträglichkeit, Flammwidrigkeit und Shore A-Härte der hergestellten PVC-Muster**

| **Beispiel** | **Flammschutzmittel (Komponente D)** | **Verträglichkeit** | **LOI** | **Shore A-Härte** |
|---|---|---|---|---|
| V1 | S1 (Vergleichsbeispiel) | - | n.b. | n.b. |
| V2 | S2 (Vergleichsbeispiel) | - | n.b. | n.b. |
| V3 | S3 (erfindungsgemäß) | + | 33,8 | 84 |
| V4 | S4 (erfindungsgemäß) | + | 33,1 | 82 |
| V5 | S5 (erfindungsgemäß) | + | 33,7 | 83 |
| V6 | S6 (erfindungsgemäß) | + | 32,6 | 90 |

| | | | | |
|---|---|---|---|---|
| n.b. = nicht bestimmt. | | | | |

Die Ergebnisse zeigen, dass der aus EP 0043482 A2 bekannten Phenylphosphonsäurediphenylester S1 und der aus US 2009 149587 A1 bekannte Phenylphosphonsäurebis-(4-tert-butylphenyl)ester S2 zur Herstellung von flammwidrigen Weich-PVC ungeeignet sind. Wegen geringer Verträglichkeit sind die entsprechenden PVC-Compounds V1 und V2 nicht ausreichend stabil. Die Flammwidrigkeit und Weichmacherwirkung dieser PVC-Compounds wurde daher nicht näher bestimmt. Die erfindungsgemäßen Mischungen von Phenylphosphonsäurediarylester S3-S6 sind hingegen mit PVC hinreichend verträglich. Sie zeigen eine ausreichende Flammschutzwirkung (LOI-Wert >30) bei gleichzeitig guter Weichmacherwirkung (Shore A-Härte <95).

## Patentansprüche

1. Mischungen von Phenylphosphonsäurediarylestern enthaltend
(i) 8 bis 60 Gew.-% Phenylphosphonsäurediarylester gemäß Formel (I) 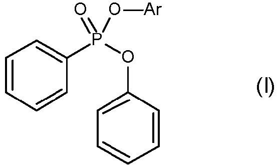
(ii) 0,5 bis 91,5 Gew.-% Phenylphosphonsäurediarylester gemäß Formel (II), 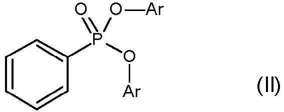 sowie
(iii) 0,5 bis 91,5 Gew.-% Phenylphosphonsäurediphenylester gemäß Formel (III) 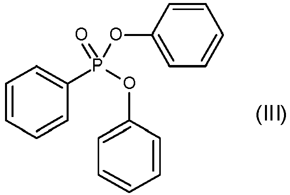 jeweils bezogen auf die Gesamtmenge der Phenylphosphonsäureester der Formeln (I) bis (III), wobei Ar für einen ein- oder mehrfach alkylsubstituierten Arylrest mit insgesamt 7 - 10 Kohlenstoffatomen steht.

2. Mischungen gemäß Anspruch 1, **dadurch gekennzeichnet, dass** Ar für 2-Methylphenyl, 3-Methylphenyl, 4-Methylphenyl, 2-Ethylphenyl, 3-Ethylphenyl, 4-Ethylphenyl, 2-Propylphenyl, 3-Propylphenyl, 4-Propylphenyl, 2-Butylphenyl, 3-Butylphenyl, 4-Butylphenyl, 2,3-Dimethylphenyl, 2,4-Dimethylphenyl, 2,5-Dimethylphenyl, 2,6-Dimethylphenyl, 3,4-Dimethylphenyl oder 2-Isopropyl-5-methylphenyl steht.

3. Mischungen gemäß Anspruch 1, **dadurch gekennzeichnet, dass** Ar für 2-Methylphenyl, 3-Methylphenyl, 4-Methylphenyl, 2-Isopropylphenyl, 3-Isopropylphenyl, 4-Isopropylphenyl, 4-tert-Butylphenyl oder 2-Isopropyl-5-methylphenyl steht.

4. Mischungen nach einem oder mehreren der Ansprüche 1 bis 3, die bei 23°C eine dynamische Viskosität von 5 bis 5000 mPa·s, besonders bevorzugt von 5 bis 2000 mPa·s und meist bevorzugt von 5 bis 1000 mPa·s (jeweils bei 23°C) aufweisen.

5. Mischungen nach einem oder mehreren der Ansprüche 1 bis 3, die eine Säurezahl von kleiner 5 mg KOH/g, bevorzugt kleiner 1 mg KOH/g, besonders bevorzugt kleiner 0,3 mg KOH/g und meist kleiner 0,1 mg KOH/g aufweisen.

6. Verwendung von Mischungen gemäß einem oder mehreren der Ansprüche 1 bis 5 als Flammschutzmittel, vorzugsweise als Flammschutzmittel für synthetische Polymere, Werkstoffe pflanzlichen Ursprungs oder Werkstoffe tierischen Ursprungs, und besonders bevorzugt als Flammschutzmittel für Polyvinylchlorid (PVC).

7. Formmasse enthaltend eine Mischung gemäß einem oder mehreren der Ansprüche 1 bis 5 und Polyvinylchlorid (PVC).

8. Formmasse gemäß Anspruch 7, welche von 5 bis 150 Gewichtsteile, bevorzugt 10 bis 120 Gewichtsteile, bevorzugt 20 bis 100 Gewichtsteile, besonders bevorzugt 30 bis 70 Gewichtsteile der Phenylphosphonsäureester der Formeln (I) bis (III) bezogen auf 100 Gewichtsteile PVC enthält.

9. Verwendung von Formmassen nach Anspruch 7 oder 8 zur Herstellung von Beschichtungen, Folien, Fußbodenbelägen, Kabel, Rohrleitungen, Schläuchen, Dichtungen, Förderbändern, Dachbahnen, Klebebandfolien, Planen, Markisen oder Zelten.

10. Verwendung von Mischungen gemäß einem oder mehreren Ansprüchen 1 bis 5 als Hydraulikflüssigkeit oder Additiv in Hydraulikflüssigkeiten.

11. Verwendung von Mischungen gemäß einem oder mehreren Ansprüchen 1 bis 5 als Schmierstoffadditiv.

12. Verwendung von Mischungen gemäß einem oder mehreren Ansprüchen 1 bis 5 als Additiv für Lacke, Klebstoffe, Dichtmassen oder Beschichtungen.

13. Verwendung von Mischungen gemäß einem oder mehreren Ansprüchen 1 bis 5 als Wärmeträger oder als Additiv für Wärmeträger-Zubereitungen.

14. Verwendung von Mischungen gemäß einem oder mehreren Ansprüchen 1 bis 5 als Lösungs- oder Extraktionsmittel.
